# EUROPEAN PATENT APPLICATION

(11) **EP 3 879 501 A1**
(43) Date of publication of application: **15.09.2021**
(21) Application number: 20305257.6
(22) Date of filing: 12.03.2020
(51) Int. Cl.: G06T 19/20

(54) **METHOD AND APPARATUS FOR MODELLING A SCENE**

(71) Applicant: InterDigital CE Patent Holdings, 75017 Paris (FR)
(72) Inventor: ROBERT, Philippe, 35576 Cesson-Sevigne (FR); BAILLARD, Caroline, 35576 Cesson-Sevigne (FR); LAURENT, Anthony, 35576 Cesson-Sevigne (FR); JOUET, Pierrick, 35576 Cesson-Sevigne (FR)
(74) Representative: Interdigital

(57) **Abstract**

According to embodiments, a scene modelling system may (e.g., initially) obtain and (e.g., subsequently) update a model of a scene based on data describing the scene. The data describing the scene may be received from any of sensors and objects, for example, located in the scene. The scene may comprise a set of connected and unconnected objects. An object may be associated with its own part of the model that may have been built, for example in an initialization phase. A connected object may transmit its (e.g., part of) model to the scene modelling system (e.g., on demand or upon detection of any change). An unconnected object (e.g., and its status) may be recognized in the scene from an image of the object, for example, captured in the scene.

## Description

### 1. TECHNICAL FIELD

The present disclosure relates to the domain of environment modelling for various applications such as augmented reality applications.

### 2. BACKGROUND ART

An environment may be either static or dynamic. A dynamic environment may be (e.g., continuously) evolving over time. For example, the position of some objects in the scene or the lighting conditions of the scene may vary over time. Modelling an environment may be computationally expensive especially if the scene to be modelled is large and/or dynamically evolving. The present disclosure has been designed with the foregoing in mind.

### 3. SUMMARY

According to embodiments, a scene modelling system may (e.g., initially) obtain and (e.g., subsequently) update a model of a scene based on data describing the scene. The data describing the scene may be received from any of sensors and objects, for example, located in the scene. The scene may comprise a set of connected and unconnected objects. An object may be associated with its own part of the model that may have been built, for example in an initialization phase. A connected object may transmit its (e.g., part of) model to the scene modelling system (e.g., on demand or upon detection of any change). An unconnected object (e.g., and its status) may be recognized in the scene from an image of the object, for example, captured in the scene. According to embodiments, a camera providing images of the scene (e.g., from which unconnected objects may be recognized), may be coupled to the scene modelling system. The camera may be any of camera located in the scene (static or moving), and the camera of a user's device.

### 4. BRIEF DESCRIPTION OF THE DRAWINGS

- **Figure 1** is a system diagram illustrating an example of a scene modelling system with at least one object;
- **Figure 2** is a diagram illustrating an example of a method for modelling a scene;
- **Figure 3** is a diagram illustrating an example of a processing device for modelling a scene;
- **Figure 4** is a diagram representing an exemplary architecture of the processing device of figure 3.

It should be understood that the drawing(s) are for purposes of illustrating the concepts of the disclosure and are not necessarily the only possible configuration for illustrating the disclosure.

### 5. DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the term " interconnected " is defined to mean directly connected to or indirectly connected with through one or more intermediate components. Such intermediate components may include both hardware and software based components. The term "interconnected" is not limited to a wired interconnection and also includes wireless interconnection.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Embodiments described herein may be related to any of augmented, mixed and diminished reality applications. For the sake of clarity, embodiments described herein are illustrated with an augmented reality application example, but they may also be applicable to any of mixed reality and diminished reality applications. Augmented reality (AR) applications may enable an interactive experience of a real-world environment where the objects that reside in the real world may be enhanced by computer-generated perceptual information, such as for example, virtual objects inserted in an image captured and/or a model obtained from the real-world environment. AR applications may rely on (e.g., real-world) environment modelling. For example, modelling an environment may include obtaining (e.g., estimating) a model for any of a (e.g., 3D) geometry, texture, reflectance (e.g., diffuse, specular), lighting and movement of a (e.g., real-world) scene. Modelling an environment may be based, for example, on sensors observing the scene and providing data from which a model may be carried out (e.g., obtained, generated). A model may be seen as a (e.g., data structured) representation of the (e.g., real world) scene, in which any of the geometry, texture, reflectance, lighting and movement of the scene may be modelled (e.g., specified, described). A (e.g., real-world) scene may include a set of objects, such as for example, and without limitation, any of furniture elements (e.g., chair, table, desk, cabinet, ...), walls, floor, windows, doors, and more generally anything that may be located in a (e.g., real-world) scene.

According to embodiments, a model may include a plurality of model elements, wherein a model element may represent a (e.g., specific) object of the scene. A part of a model, for example, corresponding to (e.g., modelling) a (e.g., specific) object of the scene may be referred to herein as a model element. A model element may be described (e.g., represented) in the model by any kind of data structure allowing to represent any of a geometry, a texture, a lighting, a reflectance and a movement of the corresponding object in the scene.

If a scene is static, obtaining a model of the scene once may allow to provide an accurate model of the scene. If the scene is not static (e.g., evolving over time), updating the model may allow to maintain the accuracy of the model over time and to maintain the realism of the AR user experience using the model. Continuously updating the model may become computationally expensive, especially if the scene is large. In another example, continuously maintaining the (e.g., whole) model of a large scene up to date may be a waste of computation resources, if the whole scene is not used by the AR application. In a dynamic scene, only a part of the objects (e.g., elements) may evolve over time, whereas other (e.g., most) objects may remain static. Updating the model for (e.g., only) the evolving objects may allow to maintain an accurate model of the scene while minimizing (e.g., limiting) the computation resources. For example, when a user launches an AR application based on a model of an evolving scene, maintaining an accurate model of the scene, may allow to improve the realism of the augmented reality application According to embodiments, the decomposition of the scene in objects may be based on the parts of the scene that may change (e.g., vary). If for example, an object is detected as movable, modelling that object, separated from the rest of the model of the scene (e.g., as a specific model element) may allow to facilitate the update of the model, for example, after a displacement of the object in the scene (e.g., by using less computation resources).

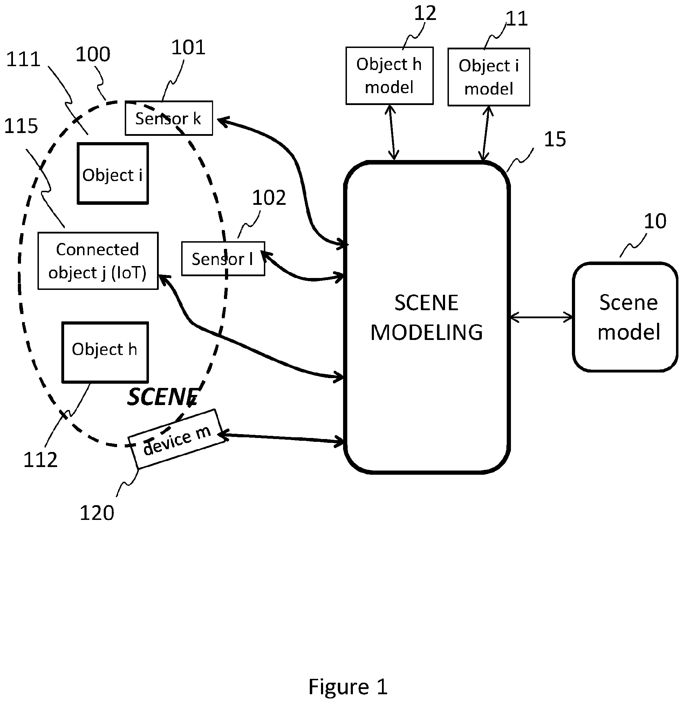

**Figure 1** is a system diagram illustrating an example of a scene modelling system with a set of objects. A scene 100 may include a variety of objects 111, 112, 115 and sensors 101, 102. A scene modelling system 15 (e.g., processing module), for example, located (e.g., running, executing) on a server, may be configured to obtain a model 10 of the scene 100, based on data describing the scene. According to embodiments, the scene modelling system 15 may be configured to receive data describing the scene from any of (e.g., connected) objects 115 and sensors 101, 102, for example, located in the scene. According to embodiments, sensors 101, 102 may be configured to observe (e.g., extract data from) the scene or part of the scene. According to embodiments, data describing the scene may also be received from sensors embedded in, for example, a (e.g., user, movable) device 120. An object 115 (e.g., to be modelled) in the scene 100 capable of transmitting data describing (e.g., the object 115 in) the scene 100 may be referred to herein as a connected object. The scene 100 may comprise other objects 111, 112 not capable of transmitting any data describing the scene 100, that may be referred to herein as an unconnected object. According to embodiments, some data describing (e.g., a part of) the scene may be received from a device connected to an external network, such as for example Internet (not represented). A device providing data describing the scene to the scene modelling system 15 from an external network may be referred to herein as a cloud data provider.

According to embodiments, the scene modelling system 15 may be configured to request any of a connected object 115, a sensor 101, 102, a device 120, and a cloud data provider for getting initial data so as to obtain (e.g., create, generate, process) a model 10 of the scene based on received initial data. For example, the scene modelling system 15 may be configured to request any of the connected object 115, sensor 101, 102, device 120, and cloud data provider for getting subsequent data (e.g., updates) so as to update the model 10 based on the received subsequent data. In another example, the scene modelling system 15 may be configured to receive (e.g., unsolicited) data (e.g., updates) from any of the connected object 115, sensor 101, 102, device 120, and cloud data provider, for example, as changes in the scene may be detected. For example, an Internet of Things (loT) object may (e.g., spontaneously) publish (e.g., transmit) data as they evolve. Modelling of the scene may include modelling of any of (e.g., 3D) geometry of the elements of the scene, texture or reflectance (diffuse, specular) of the surfaces, lighting of the scene, movements of objects, etc.

According to embodiments the scene 100 may include connected objects 115 capable of providing (e.g., transmitting) a model element (e.g., description, parameter), that may be used by the scene modelling system 15 to obtain (e.g., and update) the model 10 of the scene. For example, the model element may include any of the following modelling features (e.g., parameters): shape (e.g., form, size), location, orientation, texture, lighting model for lights, etc. Some modelling features may be static (e.g., shape). Some modelling features may be dynamic (e.g., location, orientation). The model element description may include some pre-determined parameters (e.g., shape, reflectance that may have been pre-determined during the manufacturing of the object 115). For example, an (e.g., initial) model element (e.g., description) of a connected object 115 may be received from the connected object 115. In another example, the (e.g., initial) model element (e.g., description) of the connected object 115 may be received from a cloud data provider, and initial parameter values of the model element reflecting the status of the connected object, may be received from the connected object 115. Subsequent parameter values reflecting a change of status of the connected object 115 in the scene may be further received (e.g., spontaneously generated, or whenever queried) from the connected object 115 as the status of the object 115 evolve. The model 10 of the scene 100 obtained (e.g. and updated) based on any received (e.g., model element) data may comprise a set of features corresponding to any of a geometry (e.g., shape, location, orientation...), a reflectance or texture (diffuse and specular parameters...) associated with the object 115.

According to embodiments, an object 115 of the scene 100 may be a lighting object having lighting parameters (e.g., any of a type of light, a color, an intensity, etc). For example, a lighting object may include emissive objects such as any of ceiling lamps, floor lamps, desk lamps, etc. In another example, a lighting object may include a window or a door (e.g., towards outdoor). A lighting object may be modelled by any of point lights, spotlights, and directional lights, etc. For example, a lighting object may have a status parameter such as e.g., "switched off/on". A lighting object may have a variable intensity value if, for example, the lighting object is associated with a variator. According to embodiments, a lighting object may be a connected or an unconnected object. According to embodiments, a model element of a lighting object may be pre-determined, for example, including their possible dynamic parameter values (e.g., when the lighting object is designed or manufactured).

According to embodiments, the position of any of a connected object and an unconnected object may be entered (e.g., adjusted) by a user via a user interface of (e.g., associated with) the scene modelling system 15.

According to embodiments, the scene 100 may comprise an unconnected object 111, 112, corresponding to a part of the model 11, 12 (e.g., model element). The unconnected object 111, 112 may be recognized, for example from an image of the unconnected object 111, 112, for example captured by any of a sensor 101, 102, and a device 120 (e.g., located in the scene). In another example, an unconnected object 111, 112 may be recognized from a capture of a barcode associated with it, and at least static parameters of the model element 11, 12 may be retrieved (e.g. shape, texture), for example from a cloud data provider.

According to embodiments, the scene 100 may include surfaces or objects that may not correspond to any existing (e.g., pre-determined, retrievable) model element 11, 12. They may be considered as belonging to the "background" and being static.

According to embodiments, additional data concerning the model 10 of the scene such as, for example the plan of the scene, may be loaded (e.g., from a cloud data provider, or provided via a user interface of the scene modelling system 15) and used when available.

According to embodiments, the scene may comprise at least one sensor 101, 102 capable of transmitting (e.g., raw) data to the scene modelling system 15 for providing any kind of information about the scene. A sensor 101, 102 may, for example, be a fixed camera capturing an image (e.g., any of color and depth) of the scene, from which an unconnected object 111, 112 may be recognized. In another example a sensor 101, 102 may be a mechanical sensor detecting whether an opening (door, window, shutter) may be open or closed. In yet another example a sensor 101, 102 may be any of a luminosity sensor and a temperature sensor capable of indicating, for example, whether (and how strongly) outdoor sun is currently illuminating a part of the scene.

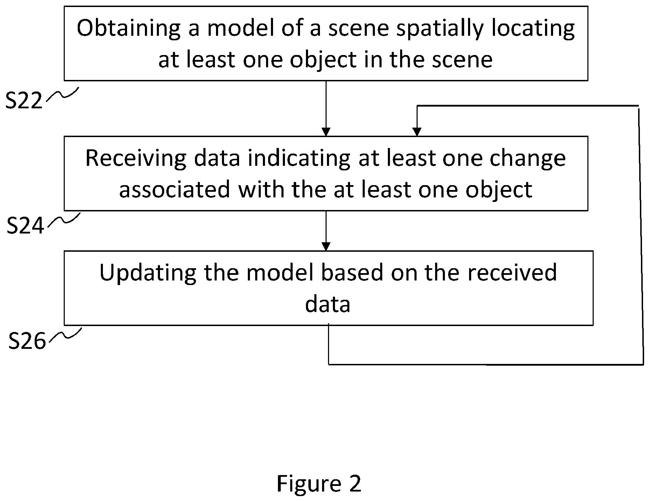

**Figure 2** is a diagram illustrating an example of a method for modelling a scene. According to embodiments, in a step S22, a model 10 of a scene 100 may be obtained, the model being based on (e.g., initial) data describing the scene and spatially locating at least one object 111, 112, 115 in the scene. The model 10, for example, may comprise a location information allowing to determine a position in the model 10 corresponding to the object 111, 112, 115. The model 10, for example, may comprise a background, at least one model element associated with the at least one object 111, 112, 115 and a lighting model. The model may, for example, include a spatial location of at least one light source in the scene and a spatial location of the object, so that the impact (e.g., reflectance, shadow) of the light source on the object may be modelled.

According to embodiments the model 10 of the scene 100 may be received from another device, for example connected to a same network. The model may be received from a data provider located in the cloud, where, for example, the model 10 may have been generated based on the (e.g., initial) data describing the scene 100.

According to embodiments, the model 10 of the scene 100 may be generated (e.g., processed, computed, estimated) based on the (e.g., initial) data describing the scene 100. For example, initial data may be collected from any of the connected objects 115, sensors 101, 102, a device 120, and a cloud data provider. The model 10 of the scene 100 may be an object-based model with a set of characteristics associated with (e.g., each) object 111, 112, 115. The model may include static and variable parameters. Depending on the object 111, 112, 115, the characteristics may be, for example, the location and shape of the object, its texture... If the object is a lamp, the characteristics may include the status of the lamp (e.g. switched off/on), and a lighting model of the lamp (e.g., any of a light type (e.g., point, spot, area...), a position, a direction, an intensity, a color, etc).

According to embodiments, in a step S24 subsequent data may be collected (e.g., received) from any of the connected objects 115, sensors 101, 102, a device 120, and a cloud data provider. The subsequent data (e.g., received after the initial data) may indicate a change associated with any of the connected 115 and unconnected 111, 112 objects.

According to embodiments, in a step S26, the model may be updated based on the received subsequent data. For example, the model may be regularly updated (e.g. on a regular basis, as a background task). The scene modelling system 15 may regularly send requests to connected objects 115 for new (e.g., subsequent) data. In another example, a connected object 115 may autonomously send a message to the scene modelling system 15 indicating a change of the model element.

According to embodiments, the scene may comprise at least one unconnected object 111, 112. Any of initial and subsequent data may be received, for example from a (e.g., image capture) sensor 101, 102 (e.g., such as any of a color and depth sensor). The (e.g., image capture) sensor may be located in the scene (e.g., as a fix wide angle lens camera) or outside of the scene. The (e.g., image capture) sensor may for example be part of a (e.g., movable, user) device 120. Any of initial and subsequent data may comprise (e.g., any of a color and depth) images from any number of (e.g., different) viewpoints.

The unconnected object 111, 112 may be recognized by any image processing technique known to the skilled in the art (e.g., object recognition, deep learning, etc). According to embodiments, a model element 11, 12 may be generated based on the recognized object. For example, the model element 11, 12 may be extracted from a database of model elements associated with a set of objects, queried based on the recognized object. In another example, the model element 11, 12 may be received from a cloud data provider, based on the recognized object (e.g., by querying the cloud data provider with the recognized object). The (e.g., recognized) object may be any of a TV set, a furniture element, a door, a window, a lamp, ...

According to embodiments, the unconnected object 111, 112 may be a window, and recognized as such based on an image of the scene including the window. The window may for example be recognized as a window based on its shape and luminosity/contrast with regards to neighbouring areas in the image. Any of a location (e.g., longitude, latitude position), an orientation (e.g., relative to north) and an altitude (e.g., relative to the sea level) of the window may be obtained, for example from the device having captured the image. A model element may be generated/received based on any of a generic shape, a location (e.g., on Earth), an orientation (e.g., relative to north) and lighting model. According to embodiments, some further (e.g., any of initial and subsequent) data indicating any of a day of year, time of day and meteorological conditions may be received, for example from a cloud data provider. The further data (e.g., any of a day of year, time of day and meteorological conditions) may allow to parametrize the generic model element 11, 12 of the window 111, 112. For example, depending on any of the day of the year (e.g., summer or winter), the time of day (e.g., early morning, midday), the location (e.g., on Earth), the orientation of the window, the meteorological conditions (e.g., sunny, cloudy) any of the lighting model parameters (e.g., light directions, light intensity) of the window may be adjusted. According to embodiments, the parametrization of the generic model may be part of the initial model 10 generation or of any subsequent update of the model 10.

According to embodiments, the scene may comprise at least one connected object 115. Any of initial and subsequent data may be received, for example from any of the connected object itself and an external device (e.g., a server located in the cloud). Any of initial and subsequent data may comprise a model element representing the object 115 in the model 10. For example, the scene modelling system 15 may receive a model element as initial data from the connected object 115. In another example the scene modelling system 15 may receive the model element (e.g., as initial data) from a cloud data provider (e.g., queried with an identifier of the connected object 115).

After a change occurred for the connected object (any parameter change) the scene modelling system 15 may receive an updated model element as subsequent data from the connected object 115. In another example, the connected object 115, after a change occurred in the connected object 115, may transmit (e.g., only) the parameter value(s) indicating the change for updating the corresponding model element of the object 115 and the model 10 of the scene.

According to embodiments, after the initial model 10 of the scene 100 has been obtained, a change in the scene 100 may occur and may impact the model 10. For example, any of a connected and unconnected object (e.g., a chair, a lamp, ...) may have moved to another location in the scene. In another example, any of a connected and unconnected object (e.g., a window, a lamp, ...) may have changed its status (e.g., outdoor sun may have declined, lamp may be switched on, shutter may have been closed, etc). Subsequent data indicating the change associated with the object may be any of an updated parameter value of a model element, an updated model element, an (any of color and depth) image of the object from which the corresponding model element may be updated.

According to embodiments, an AR application may execute on a renderer device and may use the model 10. For example, the scene modelling system 15 may receive a request for a model information (any of a (e.g., set of) parameter value, a (e.g., set of) model element, a (e.g., set of) feature, ...) at a position (e.g., location) in the scene 100. The scene modelling system 15 may extract the requested model information from the (e.g., lastly) updated model 10 and may send the extracted and up-to-date model information to the AR application.

According to embodiments, a model 10 of a scene 100 may be available in the scene modelling system 15 (e.g., initially obtained as previously described). An augmented application of the scene may be started on a rendering device. The scene modelling system 15 may be invoked by the AR application to check whether the model 10 is up-to date or may be updated. For example, the scene modelling system 15 may query the connected objects 115 for checking their current status. For example, the scene modelling system 15 may collect sensor data from sensors 101, 102 of the scene 100. Sensor data may be processed to detect any change in the scene 100 and the model parameters of any of the unconnected objects 111, 112 and the background may be updated.

According to embodiments a user may be solicited, for example, to take pictures (e.g., using the device 120) of specific areas (e.g., from specific viewpoints) for any of (e.g., initially) generating and updating the model of the scene. For example, the user may be guided to reach the pose(s) (e.g., of the device 120) from which he may be invited to take pictures. These pictures may be processed by the scene modelling system 15 to complete (e.g., possibly update) the model 10. In another example, the status (on/off for instance) of specific light sources may be (e.g., manually) configured by a user via a user interface.

### Example: Lighting model

According to embodiments, a model of a scene may be (e.g., initially) obtained based on initial data describing the scene as previously described in any embodiment. The model may comprise at least a (e.g., 3D) geometry of the scene, (e.g., obtained by processing a set of images captured from the scene). Information on (e.g., potential) light sources (e.g., any of windows, ceiling lights, floor lamps, desk lamps; ...) may be obtained in the model based on a process of recognition of objects in a scene such as, for example, an automatic semantic labelling process of the captured images. Automatic semantic labelling may be based e.g., on deep learning and may allow to detect any of windows and lamps as potential light sources. For example, a ceiling lamp may be detected, its size may be measured, and a set of point lights may be created which location in the model may distributed on the detected lamp area.

The scene may include connected (e.g., lighting) objects such as, for example, any of lamps and shutters. The connected objects may be positioned (e.g., spatially localized) within the scene model. For example, a position in the model of the scene may be determined for each connected object detected in the scene. If applicable, a connected object (e.g., a lamp, a shutter) may be associated with a previously detected light source. Any of the positioning and the association may be performed automatically by means of (e.g., specific, additional) sensors or (e.g., manually) configured via a user interface.

According to embodiments, a (e.g., potential) light source may be associated with a lighting model e.g., a set of lighting parameters including, for example, any of a light type (e.g., point, spot, area...), a position, a direction, a status (e.g., on/off), an intensity, a color, etc...

Some parameters such as a (e.g., ceiling) light source type and position may be considered stable (e.g., static) overtime and may be determined (e.g., only) once. Some other parameters such as any of a light status and intensity may vary over time and may be retrieved by the scene modelling system for updating the model, for example upon receiving a request from an AR application.

According to embodiments, the parameters of the (e.g., lighting) model may be updated after receiving of a (e.g., every) request from the AR application. If the request of the AR application is associated with a position in the scene, (e.g., only) closest light source candidates may be considered for updating the model. The scene modelling system may collect real time information (e.g., subsequent data) associated with the candidate light sources in order to update the values of the corresponding parameters of the model. For instance, the scene modelling system may determine (e.g., update) light parameters in real-time according to any subsequent data received from connected objects (e.g., smart light bulbs (off/on, current color), shutters status (open/closed), time and weather conditions. Light parameters may be also determined (e.g., updated) based on a shadow analysis in an image associated with the request.

According to embodiments, lighting parameters of a (e.g., specific) area of the scene may be obtained by analysing any of outward and inward images of the (e.g., specific) area of the scene. An inward image of an area may be referred to herein as an image captured by a (e.g., inward) camera, directed towards the area. Processing an inward image of an area may allow to detect, for example, any of a shadow and specular effects on a surface in the area. For example, any of a type, a position, a color and an intensity of a light source may be obtained (e.g., estimated) based on shadow(s) in an inward image captured by a camera pointing at objects with their respective shadow(s). An outward image of an area may be referred to herein as an image captured by a (e.g., outward) camera, e.g., located in the area and directed towards the environment outside of the area. Processing an outward image of an area may allow to detect potential sources of lights in the environment of that area and to build a map of the environment. For example, some information on potential light sources (e.g., any of type, position, orientation) may be (e.g., automatically) determined by analysing outward images of the scene captured by cameras, using for example machine learning techniques. For example, any of windows and artificial light sources may be detected in the images.

According to embodiments, a lighting model status may be derived for a (e.g., each) window of the scene based on an outdoor lighting model and, for example, on the status of the window shutter (e.g., if any). The outdoor lighting model may be derived (e.g., parametrized), for example, based on specific data (day of year, time of day, meteorological conditions), that may be received (e.g., initially, subsequently) from, for example, a cloud data provider.

According to embodiments, light sources in the model may correspond to loT objects such as smart bulbs, which may provide information on their own parameters. For example, some light sources (e.g. fixed ceiling lights) may have been (e.g., initially) modelled with variable parameters, and the parameter values (e.g. switched on/off, intensity) may be transmitted by the smart bulb (upon any of a parameter change detection and a request reception) to the (e.g., current global lighting) model.

According to embodiments some information on potential light sources (any of type, position, orientation) may be interactively determined (e.g., adjusted) via a user interface: the scene modelling system may request the user to indicate the light location in 3D space using, for example, his mobile device and select (e.g., adjust) light attributes.

According to embodiments, a rendering display device may connect to the processing device running the scene modelling system, and request lighting information at a (e.g., given) position in the scene. The (e.g., given) position in the scene may be converted into a corresponding location in the scene model. The scene modelling system may extract, from the (e.g., lastly updated) model of the scene, the requested lighting information associated with the corresponding location in the scene model and return (e.g., send back) to the rendering device the extracted lighting information. The (e.g., requested, extracted) lighting information may be any kind of lighting parameter of any embodiments described herein associated with an area of the lighting model, corresponding to the requested location.

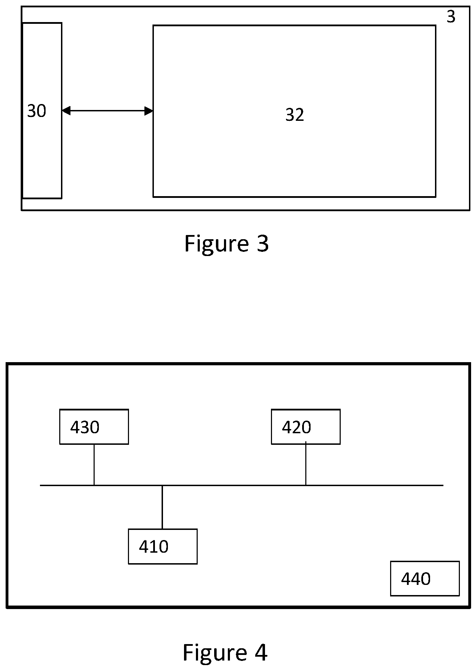

**Figure 3** is a diagram illustrating an example of a processing device for modelling a scene. According to embodiments, the processing device 3 may comprise a network interface 30 for connection to a network. The network interface 30 may be configured to send and receive data packets for requesting and receiving any of initial and subsequent data describing a scene. According to embodiments, the network interface 30 may be any of:
- a wireless local area network interface such as Bluetooth, Wi-Fi in any flavour, or any kind of wireless interface of the IEEE 802 family of network interfaces;
- a wired LAN interface such as Ethernet, IEEE 802.3 or any wired interface of the IEEE 802 family of network interfaces;
- a wired bus interface such as USB, FireWire, or any kind of wired bus technology.
- a broadband cellular wireless network interface such a 2G/3G/4G/5G cellular wireless network interface compliant to the 3GPP specification in any of its releases;
- a wide area network interface such a xDSL, FFTx or a WiMAX interface.

More generally, any network interface allowing to send and receive data packets may be compatible with embodiments described herein.

According to embodiments, the network interface 30 may be coupled to a processing module 32, configured to obtain a model of a scene, the model being based on initial data describing the scene, for example, received via the network interface 30. According to embodiments, the processing module 32 may be configured to receive subsequent data indicating at least one change associated with the at least one object in the scene. According to embodiments, the processing module 32 may be configured to update the model based on the received subsequent data.

According to embodiment, the processing device may be coupled with an (e.g., optional) user interface, running (e.g., and displayed) locally on the processing device 3 (not represented). According to embodiments the user interface may be running on another device, communicating with the processing device 3 via the network interface 30. The user interface may allow the processing device 3 to interact with a user, for example, for any of requesting additional images of (e.g., parts) of the scene, adjusting some parameters of the model, ...

**Figure 4** represents an exemplary architecture of the processing device 3 described herein. The processing device 3 may comprise one or more processor(s) 410, which may be, for example, any of a CPU, a GPU a DSP (English acronym of Digital Signal Processor), along with internal memory 420 (e.g. any of RAM, ROM, EPROM). The processing device 3 may comprise any number of Input/Output interface(s) 430 adapted to send output information and/or to allow a user to enter commands and/or data (e.g. any of a keyboard, a mouse, a touchpad, a webcam, a display), and/or to send / receive data over a network interface; and a power source 440 which may be external to the processing device 3.

According embodiments, the processing device 3 may further comprise a computer program stored in the memory 420. The computer program may comprise instructions which, when executed by the processing device 3, in particular by the processor(s) 410, make the processing device 3 carrying out the processing method described with reference to figure 2. According to a variant, the computer program may be stored externally to the processing device 3 on a non-transitory digital data support, e.g. on an external storage medium such as any of a SD Card, HDD, CD-ROM, DVD, a read-only and/or DVD drive, a DVD Read/Write drive, all known in the art. The processing device 3 may comprise an interface to read the computer program. Further, the processing device 3 may access any number of Universal Serial Bus (USB)-type storage devices (e.g., "memory sticks.") through corresponding USB ports (not shown).

According to embodiments, the processing device 4 may be any of a server, a desktop computer, a laptop computer, an access point, wired or wireless, an internet gateway, a router, a laptop computer, a networking device.

According to an embodiment, a method for modelling a scene is described herein. The method may comprise:
- obtaining a model of the scene spatially locating at least one object in the scene, the model being based on initial data describing the scene;
- receiving subsequent data indicating at least one change associated with the at least one object in the scene;
- updating the model based on the subsequent data.

According to an embodiment, an apparatus for modelling a scene is described herein. The apparatus may comprise a processor configured to:
- obtain a model of the scene spatially locating at least one object in the scene, the model being based on initial data describing the scene;
- receive subsequent data indicating at least one change associated with the at least one object in the scene;
- update the model based on the subsequent data.

According to a variant, any of said initial and subsequent data comprise at least one image of the scene.

According to a variant, any of said initial and subsequent data comprise at least one image of the scene.

According to another variant, the at least one object is an unconnected object, recognized from the at least one image of the scene.

According to another variant, a first part of the model representing the unconnected object is obtained based on the at least one image of the scene.

According to another variant, any of the initial and subsequent data is received from a sensor.

According to another variant, the at least one object is a connected object and any of the initial and subsequent data is received from the connected object.

According to another variant, the initial data comprise a second part of the model representing the connected object, the subsequent data comprising at least one parameter to be updated in the second part of the model.

According to another variant, the at least one object corresponds to a light source.

According to another variant, the said light source is associated with a set of parameters including any of a light type, a position, a shape, a dimension, a direction, a status, an intensity and a color.

According to another variant, the light source represents a window, any of said initial and subsequent data comprising any of shutter status, day of year, time of day and weather conditions.

According to another variant, the light source represents a smart bulb, from which any of said initial and subsequent data is received.

According to another variant, a request for model information at a position in the scene is received and the requested model information is sent based on the updated model.

### CONCLUSION

While not explicitly described, the present embodiments may be employed in any combination or sub-combination. For example, the present principles are not limited to the described variants, and any arrangement of variants and embodiments may be used. Moreover, embodiments described herein are not limited to the (e.g., lighting) model parameters and (e.g., connected, unconnected) objects described herein and any other type of model parameters and objects is compatible with the embodiments described herein.

Besides, any characteristic, variant or embodiment described for a method is compatible with an apparatus device comprising means for processing the disclosed method, with a device comprising a processor configured to process the disclosed method, with a computer program product comprising program code instructions and with a non-transitory computer-readable storage medium storing program instructions.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer readable medium for execution by a computer or processor. Examples of non-transitory computer-readable storage media include, but are not limited to, a read only memory (ROM), random access memory (RAM), a register, cache memory, semiconductor memory devices, magnetic media such as internal hard disks and removable disks, magneto-optical media, and optical media such as CD-ROM disks, and digital versatile disks (DVDs).

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the representative embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory ("RAM")) or non-volatile (e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (e.g., but not always, in that in certain contexts the choice between hardware and software may become significant) a design choice representing cost vs. efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or virtually any combination thereof. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

In certain representative embodiments, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/orwriting the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

The herein described subject matter sometimes illustrates different components contained within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermediate components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" or "group" is intended to include any number of items, including zero. Additionally, as used herein, the term "number" is intended to include any number, including zero.

In addition, where features or aspects of the disclosure are described in terms of Markush groups, those skilled in the art will recognize that the disclosure is also thereby described in terms of any individual member or subgroup of members of the Markush group.

Moreover, the claims should not be read as limited to the provided order or elements unless stated to that effect. In addition, use of the terms "means for" in any claim is intended to invoke 35 U.S.C. §112, 6 or means-plus-function claim format, and any claim without the terms "means for" is not so intended.

## Claims

1. A method for modelling a scene (100), the method comprising:
- obtaining (S22) a model (10) of the scene (100) spatially locating at least one object (111, 112, 115) in the scene (100), the model (10) being based on initial data describing the scene (100);
- receiving (S24) subsequent data indicating at least one change associated with the at least one object (111, 112, 115) in the scene (100);
- updating (S26) the model (10) based on the subsequent data.

2. An apparatus (3, 4) for modelling a scene, the apparatus (3, 4) comprising a processor (32, 410) configured to:
- obtain a model (10) of the scene (100) spatially locating at least one object (111, 112, 115) in the scene (100), the model (10) being based on initial data describing the scene (100);
- receive subsequent data indicating at least one change associated with the at least one object (111, 112, 115) in the scene (100);
- update the model (10) based on the subsequent data.

3. The method according to claim 1, or the apparatus according to claim 2, wherein any of said initial and subsequent data comprise at least one image of the scene (100).

4. The method or the apparatus according to claim 3, wherein said at least one object (111, 112, 115) is an unconnected object (111, 112), recognized from the at least one image of the scene (100).

5. The method or the apparatus according to claim 4, wherein a first part (11, 12) of the model (10) representing the unconnected object (111, 112) is obtained based on the at least one image of the scene (100).

6. The method according to any of claims 1 and 3 to 5, or the apparatus according to any of claims 2 to 5, wherein any of said initial and subsequent data is received from a sensor (101, 102, 120).

7. The method according to claim 1, or the apparatus according to claim 2, wherein said at least one object (111, 112, 115) is a connected object (115) and any of said initial and subsequent data is received from said connected object (115).

8. The method or the apparatus according to claim 7, wherein said initial data comprise a second part of the model representing the connected object (115), said subsequent data comprising at least one parameter to be updated in the second part of the model.

9. The method according to any of claims 1 and 3 to 8, or the apparatus according to any of claims 2 to 8, wherein said at least one object corresponds to a light source.

10. The method or the apparatus according to claim 9, wherein said light source is associated with a set of parameters including any of a light type, a position, a shape, a dimension, a direction, a status, an intensity and a color.

11. The method or the apparatus according to claim 9 or 10, wherein said light source represents a window, any of said initial and subsequent data comprising any of shutter status, day of year, time of day and weather conditions.

12. The method or the apparatus according to any of claim 9 to 10, wherein said light source represents a smart bulb, from which any of said initial and subsequent data is received.

13. The method according to any of claims 1 and 2 to 12, further comprising receiving a request for model information at a position in the scene and sending the requested model information based on the updated model.

14. The apparatus according to any of claims 2 to 12, wherein the processor is further configured to receive a request for model information at a position in the scene and to send the requested model information based on the updated model.

15. A computer program product comprising program code instructions executable by a processor for executing the method according to any of claims 1 and 2 to 13.
